# EUROPÄISCHE PATENTSCHRIFT

(11) **EP 3 159 310 B1**
(45) Veröffentlichungstag und Bekanntmachung des Hinweises auf die Patenterteilung: **22.03.2023**
(21) Anmeldenummer: 15003035.1
(22) Anmeldetag: 23.10.2015
(51) Int. Cl.: C02F 1/42, C02F 101/10, C02F 101/14, C02F 101/16, C02F 101/20, C02F 101/22, C02F 103/02

(54) **VERFAHREN ZUR REDUKTION VON SPURENELEMENTEN IN WASSER DURCH IONENAUSTAUSCHERFILTER**
METHOD FOR THE REDUCTION OF TRACE ELEMENTS IN WATER WITH ION EXCHANGE FILTER
PROCÉDÉ DE RÉDUCTION D'OLIGOÉLEMENTS DANS L'EAU PAR FILTRE ÉCHANGEUR D'IONS

(43) Veröffentlichungstag der Anmeldung: 26.04.2017
(73) Patentinhaber: Veolia Water Solutions & Technologies Support, 94410 Saint-Maurice (FR)
(72) Erfinder: Sauer, Uwe, 95326 Kulmbach (DE); Seyfferth, Horst, 95444 Bayreuth (DE); Hagen, Klaus, 95326 Kulmbach (DE)
(74) Vertreter: Patentanwaltskanzlei Methling

(56) Entgegenhaltungen:
- EP-A2- 0 900 765
- WO-A1-2015/048907
- CN-A- 103 464 086
- DE-A1-102010 022 120
- US-A- 5 591 346
- US-A- 6 080 315
- US-A1- 2002 125 195
- US-A1- 2005 205 495
- US-A1- 2009 020 477
- US-A1- 2010 301 882
- US-A1- 2015 274 545
- DEMARCO M J ET AL: "Arsenic removal using a polymeric/inorganic hybrid sorbent", WATER RESEARCH, ELSEVIER, AMSTERDAM, NL, vol. 37, no. 1, 1 January 2003 (2003-01-01), pages 164-176, XP004390523, ISSN: 0043-1354, DOI: 10.1016/S0043-1354(02)00238-5

## Beschreibung

Die Erfindung betrifft ein Verfahren zur Reduktion von Spurenelementen in Wasser, insbesondere zur Trinkwasserbereitstellung, gemäß des Oberbegriffs nach Anspruch 1.

Derartige Verfahren sind aus der US 5,591,346 A, DE 10 2010 022120 A1, US 2009/020477 A1, und der US 2005/205495 A1 bekannt.

US 6,080,315 A betrifft ein Verfahren zur Teilentsalzung von Trinkwasser, mit Ionenaustauschern, wobei die beladenen Ionenaustauscher durch CO2-haltiges Wasser regeneriert werden.

EP 0 900 765 A2 betrifft ein Verfahren zur Wasserenthärtung durch lonentauscher umfassend eine Überwachung der elektrischen Leitfähigkeit des lonentauscherablaufs und eine Bypassleitung. Der Anteil des über den Bypass geleiteten Teilstromes wird in Abhängigkeit der elektrischen Leitfähigkeit des lonentauscherablaufs geregelt.

Aus der US 2015/0274545 A1 ist es bekannt, die elektrische Leitfähigkeit auf der Reinwasserseite des austretenden behandelten Wassers zu überwachen, wobei bei einer Überschreitung eines Grenzwertes eine Regeneration des Ionenaustauschers ausgelöst wird.

Es hat sich vielfach gezeigt, das Rohwasser, welches zur Trinkwasserbereitstellung aufbereitet werden soll, Spurenelemente, wie beispielsweise Chromat enthält. Diese Spurenelemente können gesundheitsschädlich sein und stehen teilweise unter Verdacht, krebserregend zu sein.

Die Aufgabe der Erfindung ist es daher, ein Verfahren zur Reduktion von Spurenelementen von Wasser anzugeben, welches geeignet ist, im Rohwasser enthaltende Spurenelemente soweit zu reduzieren, dass das aufbereitete Wasser Trinkwasserqualität hat.

Diese Aufgabe wird erfindungsgemäß durch das Verfahren gemäß Anspruch 1 gelöst. Vorteilhafte Weiterbildungen der Erfindungen sind in abhängigen Sprüchen angegeben.

Besonders vorteilhaft bei dem Verfahren zur Reduktion von Spurenelementen in Wasser, insbesondere zur Trinkwasserbereitstellung, ist es, dass das Rohwasser zumindest einen lonenaustauscherfilter enthaltend Ionenaustauscher durchströmt und mittels des Ionenaustauschers Spurenelemente in dem Wasser reduziert werden.

Es hat sich überraschend gezeigt, dass Ionenaustauscher geeignet sind, Spurenelemente in Wasser zu reduzieren. Erfindungsgemäß kommt dabei ein mittels CO₂ - haltigen Wassers regenerierbarer Ionenaustauscher zum Einsatz. Vorzugsweise wird als Ionenaustauscher ein schwach saurer Kationenaustauscher oder ein stark basischer Anionenaustauscher oder eine Mischung aus einem schwach sauren Kationenaustauscher und einem stark basischen Anionenaustauscher eingesetzt.

Sofern eine Mischung aus schwach sauren Kationenaustauschern und stark basischen Anionenaustauschern zum Einsatz kommt, kann das Mischungsverhältnis im Bereich von 100 : 1 bis zu 1 : 100 liegen. Hierdurch ist es möglich, den Ionenaustauscher den jeweiligen Anforderungen anzupassen, d.h. das Mischungsverhältnis zwischen schwach saurem Kationenaustauscher und stark basischen Anionenaustauscher der Rohwasserqualität und insbesondere der Beladung des Rohwassers mit Spurenelementen anzupassen.

Bevorzugt liegen die zu reduzierenden Spurenelemente im Rohwasser im Bereich von unter 1 mg/l Rohwasser.

Bei den zu reduzierenden Spurenelementen handelt es sich vorzugsweise um Chromat und/oder Eisen und/oder Mangan und/oder Aluminium und/oder Arsen und/oder Fluorid und/oder Ammonium und/oder Phosphat und/oder Uran.

Insbesondere ist es mit dem erfindungsgemäßen Verfahren möglich, gesundheitsgefährdende Spurenelemente, welche in dem aufzubereitenden Rohwasser enthalten sind, signifikant zu reduzieren, um Trinkwasser bereitzustellen.

Insbesondere werden Eisen, Mangan, Aluminium, Arsen und Fluorid im anaeroben Bereich sowohl bei höheren Konzentrationen als auch im Spurenstoffbereich unterhalb von 1 mg/l Rohwasser als gelöste Stoffe vom lonenaustauscherharz aufgenommen und bei der Regeneration ohne Sauerstoffzugabe als Abwasser feststofffrei bzw. feststoffarm abgeleitet.

Ferner werden Eisen, Mangan, Aluminium, Arsen und Fluorid im aeroben Bereich sowohl bei höheren Konzentrationen als auch im Spurenstoffbereich unterhalb von 1 mg/l Rohwasser als ungelöste Stoffe vom lonenaustauscherharz gefiltert und bei der Regeneration als Abwasser abgeleitet.

Besonders bevorzugt wird mittels des Ionenaustauschers in dem lonenaustauscherfilter gleichzeitig zur Reduktion der Spurenelemente eine Teilentsalzung des Rohwassers durchgeführt. Durch eine derartige Teilentsalzung des Wassers können weitere im Rohwasser vorhandene Stoffe verringert werden, wodurch die Trinkwasserqualität verbessert werden kann.

Erfindungsgemäß erfolgt bei der Durchführung des Verfahrens eine Überwachung der elektrischen Leitfähigkeit des lonentauscherablaufs. Mit dem Begriff des lonentauscherablaufs ist dabei das aus dem lonenaustauscherfilter austretende Wasser auf der Reinwasserseite nach der Behandlung des Rohwassers mit dem Ionenaustauscher gemeint.

Ferner erfolgt eine Aufteilung des aufzubereitenden Rohwassers in zwei oder mehrere Teilströme.

Dabei wird ein erster Teilstrom des aufzubereitenden Rohwassers mittels des Ionenaustauschers behandelt, wobei ein zweiter Teilstrom von bis zu 90 % des Rohwassers über einen Bypass geführt und die beiden Teilströme auf der Reinwasserseite vermischt werden, wobei der Anteil des über den Bypass geleiteten Teilstromes in Abhängigkeit der elektrischen Leitfähigkeit des lonentauscherablaufs geregelt wird. Hierdurch ist eine geregelte Bypassfahrweise möglich. Dabei wird der Anteil des Rohwassers, welcher über den Bypass geleitet wird, innerhalb eines geschlossenen Regelkreises in Abhängigkeit der Wasserqualität des Ionentauscherablaufs geregelt. Hierdurch ist in Abhängigkeit von der Rohwasserqualität eine entsprechende Energieoptimierung der gesamten Anlagenfahrweise möglich, indem bei guter Rohwasserqualität lediglich ein Teilstrom des aufzubereitenden Rohwassers mittels des Ionenaustauschers behandelt wird, während ein zweiter Teilstrom von bis zu 90% des Rohwassers über einen Bypass geführt wird.

In Abhängigkeit von der Rohwasserqualität kann der erste Teilstrom bis zu 100 % entsprechend einer vollständigen Behandlung des aufzubereitenden Rohwassers betragen. Der zweite Teilstrom, welcher über den Bypass geführt und mit dem lonentauscherablauf vermischt wird, kann bis zu 10 %, insbesondere bis zu 20 %, insbesondere bis zu 30 %, insbesondere bis zu 40 %, insbesondere bis zu 50 %, insbesondere bis zu 60 %, insbesondere bis zu 70 %, insbesondere bis zu 80 %, insbesondere bis zu 90 % des Rohwassermassenstromes betragen.

Ferner sind mehrere, insbesondere zwei oder drei oder vier oder mehr jeweils eine lonenaustauscherschüttung enthaltende lonentauscherfilter parallel geschaltet. Dadurch kann zumindest ein lonenaustauscherfilter zur Reduktion von Spurenelementen eingesetzt werden, während gleichzeitig zumindest ein anderer lonenaustauscherfilter regeneriert und/oder rückgespült wird.

Durch die Anordnung mehrerer parallel geschalteter lonenaustauscherfilter kann der Dauerbetrieb der Anlage gewährleistet werden, indem beispielsweise bei Anordnung von drei parallel geschalteten lonenaustauscherfiltern jeweils ein lonenaustauscherfilter im Einsatz ist, während ein weiterer lonenaustauscherfilter regeneriert und rückgespült wird und der dritte lonenaustauscherfilter nach durchgeführter Regeneration und Rückspülung in Wartestellung ist.

Vorzugsweise wird dem Rohwasser vor der Behandlung mittels des Ionenaustauschers Pulveraktivkohle zur Reduzierung organischer Inhaltsstoffe zugesetzt.

Diese werden durch die Ionenaustauscher zurückgehalten und bei einer Regeneration und Rückspülung der lonenaustauscherfilter an das Eluat abgegeben.

Besonders bevorzugt wird der Ionenaustauscher in Form einer lonenaustauscherschüttung verwendet, mittels dessen Feststoffe aus dem Rohwasser gefiltert werden, die bei einer Regeneration und Rückspülung des Ionenaustauschers ausgespült und als Abwasser abgeführt werden. Vorzugsweise wird der Ionenaustauscher in Form einer lonenaustauscherschüttung verwendet, wobei eine Regeneration und Rückspülung der lonenaustauscherschüttung durch Rückspülung mit CO₂haltigem Wasser und optional Luft und/oder HCl und oder NaCl und/oder NaOH und/oder einer Mischung aus NaCl und NaOH durchgeführt wird.

Dabei ist vorzugsweise ein Spülluftgebläse zur Auflockerung des lonenaustauscherharzbettes und zur Wiederherstellung eines homogenen Mischbettes vorgesehen. Vorzugsweise wird eine Mischung aus schwach sauren Kationenaustauschern und stark basischen Anionenaustauschern verwendet. Bei den Anionenaustauschern handelt es sich um ein Harz mit funktionellen kationischen Gruppen. Bei den Kationenaustauschern handelt es sich um ein Harz mit funktionellen anionischen Gruppen.

Erfindungsgemäß erfolgt die Verwendung eines Mischbettes welches gebildet ist aus Ionenaustauscherharzen, die mit CO₂ regeneriert werden können. Dem CO₂-haltigen Wasser, welches zur Regeneration verwendet wird, kann dabei insbesondere CaCO3 und/oder CaCO3/MgO und/oder Ca(OH)2 zugesetzt sein. Hierdurch kann die Regeneration beschleunigt und verbessert werden.

Dabei wird eine Regeneration des Ionenaustauschers durch Rückspülung des lonenaustauscherfilters mit CO₂-haltigem Wasser bei Überschreitung eines festlegbaren Grenzwertes der elektrischen Leitfähigkeit des lonentauscherablaufs ausgelöst.

Dies bedeutet, dass die elektrische Leitfähigkeit des auf der Reinwasserseite des austretenden behandelten Wassers überwacht wird, wobei bei Überschreitung eines festlegbaren Grenzwertes bedarfsweise eine Regeneration des Ionenaustauschers ausgelöst wird. Besonders vorteilhaft ist dabei, dass keine turnusgemäße Durchführung der Regeneration nach einer bestimmten Anzahl Bettvolumina erfolgt, sondern nur bedarfsweise regeneriert und/oder rückgespült wird, sofern die Qualität der Wasseraufbereitung nachlässt und somit eine Regeneration des lonentauscherfilters erforderlich wird. Dies bedeutet eine große Energieeinsparung, da die Regeneration sehr energieintensiv ist. Die elektrische Leitfähigkeit des lonentauscherablaufs ist ein Maß für den Salzgehalt im lonentauscherablauf und damit direkt korreliert mit der Fähigkeit des lonentauscherfilters, die Teilentsalzung des Wassers durchzuführen. Durch die bedarfsweise Auslösung der Regenration kann hierdurch eine erhebliche Energieeinsparung erzielt werden anstelle einer turnusgemäßen Durchführung nach Erreichen einer bestimmten Anzahl von Bettvolumina.

Besonders bevorzugt wird eine CO₂-Rückgewinnung durch eine Behandlung des CO₂ enthaltenden Regenerationswassers und/oder des Eluats mittels Kompressoren oder mittels einer Kombination von Vakuumpumpen und Kompressoren nach einer Regeneration des Ionenaustauschers durchgeführt und das entnommene CO₂ in einen CO₂-Speicher zurückgeführt. Bei Erzeugung eines entsprechenden Unterdrucks wird auf Grund der Partialdruckreduktion CO₂ gasförmig frei.

Da die Bereitstellung von CO₂ sehr kostenaufwendig ist, ist es besonders vorteilhaft, wenn nach der Durchführung einer Regeneration des Ionenaustauschers aus dem immer noch CO₂-haltigen Regenerationswasser und/oder dem Eluat CO₂ zurück gewonnen und in einem CO₂-Speicher zurückgeführt wird, um dieses für die nächste durchzuführende Regeneration eines lonenaustauscherfilters bereit zu stellen.

Das bei der Regeneration des Ionenaustauschers anfallende Eluat wird vorzugweise mit einer Umkehrosmose und/oder Nanofiltration und/oder Entkarbonisierungsanlage unter Zugabe von Lauge aufbereitet, wobei das dabei anfallende Reinwasser in einen Spülwassertank zurückgeführt oder direkt in den Reinwasserstrom eingespeist wird und das Abwasser abgeleitet wird. Das in dem Spülwassertank zwischengelagerte Reinwasser kann sodann beim nächsten Durchlauf für die Regeneration des Ionenaustauschers wiederverwendet werden.

Ferner ist erfindungsgemäß die Verwendung eines mittels CO₂-haltigen Wassers regenerierbaren Ionenaustauschers zur Reduktion von Spurenelementen in Rohwasser, insbesondere zur Trinkwasserbereitstellung vorgesehen. Verwendung finden kann insbesondere ein schwach sauer Kationenaustauscher und/oder ein stark basischer Anionenaustauscher, vorzugsweise in Form eines Mischbettes zur Reduktion der Spurenelemente in Rohwasser. Bei den Spurenelementen kann es sich insbesondere um Chromat und/oder Eisen und/oder Mangan und/oder Aluminium und/oder Arsen und/oder Fluorid und/oder Ammonium und/oder Phosphat und/oder Uran handeln, die mit einer Konzentration von unter 1 mg/l im Rohwasser vorliegen.

Durch die Verwendung eines mit CO₂⁻haltigem Wasser regenerierbaren Ionenaustauschers, insbesondere in Form eines Mischbettes als Mischung aus schwach sauren Kationenaustauscher und stark basischen Anionenaustauscher, kann somit eine signifikante Reduktion gesundheitsgefährdender Spurenelemente in dem aufzubereitenden Wasser durchgeführt werden.

Das Rohwasser durchfließt dabei die lonenaustauscherfilter, in deren Filterbett die Reduktion der Spurenelemente durchgeführt wird. Als Reaktionsprodukt tritt dabei insbesondere Kohlensäure auf, welche in Wasser und Kohlendioxid (CO₂) zerfällt. Dieses wird in einer nachgeschalteten Strippanlage aus dem Wasser entfernt. Bei der bedarfsweise in Abhängigkeit der elektrischen Leitfähigkeit des lonentauscherablaufs durchgeführten Regeneration des Filterbetts werden die an den Austauscherharzen anhaftenden Ionen entfernt und die Austauscherharze wieder in ihren ursprünglichen Zustand gebracht. Hierfür wird Roh- oder Rein- oder Abwasser aus der vorhergehenden Regeneration über eine Regenerierpumpe in den Regenerierspeicher gepumpt und mit CO₂ aus der Rückgewinnung sowie aus einem CO₂-Speicher angereichert. Vom Regenerierspeicher wird die Regenerierlösung in Form CO₂angereicherten Wassers bei einem Überdruck von ca. 5 bis 6 bar durch das jeweils zur Regeneration anstehende lonenaustauscherfilterbett gedrückt.

Das Eluat gelangt von dem jeweils regenerierten lonenaustauscherfilter über einen Eluatentgaser in ein Eluatspeicher oder wird direkt abgeleitet.. Dabei kann ein Teil der Eluatmenge für die nächste Regenerationsphase wiederverwendet werden, indem dieses aus dem Eluatspeicher von der Regenerierpumpe angesaugt und in den Regenerierspeicher gefördert wird. Im Eluatentgaser wird Kohlendioxid zu etwa 95 % aus dem Regenerierstrom zurück gewonnen und über eine Vakuumpumpen- und Kompresserstation oder über eine Kompressorstation wieder in den CO₂-Regenerierspeicher zurückgefördert.

Dadurch, dass die Regeneration der lonenaustauscherfilter bedarfsweise in Abhängigkeit der Wasserqualität des lonentauscherablaufs durchgeführt wird, wird der Energie- und CO₂-Bedarf deutlich vermindert. Vorzugsweise erfolgt dabei eine permanente Überwachung der elektrischen Leitfähigkeit des lonentauscherablaufs nicht nur zur automatischen Auflösung einer Regeneration, sondern ferner zwecks permanenter Qualitätsüberwachung der Trinkwasseraufbereitung.

Derselbe Messwert der elektrischen Leitfähigkeit des lonentauscherablaufs kann zur Regelung der Bypassfahrweise in einem geschlossenen Regelkreis herangezogen werden. Durch eine solche Bypassfahrweise der Wasseraufbereitung, bei der bedarfsabhängig bis zu 100 % des Rohwassermassenstromes mittels der lonentauscherfilter aufbereitet wird, respektive bis zu 90 % des Rohwassermassenstromes über einen Bypass geführt wird, kann eine weitere Energieeinsparung erzielt werden.

## Patentansprüche

1. Verfahren zur Reduktion von Spurenelementen in Wasser, insbesondere zur Trinkwasserbereitstellung wobei Rohwasser zumindest einen lonenaustauscherfilter enthaltend Ionenaustauscher durchströmt und mittels des Ionenaustauschers Spurenelemente in dem Wasser reduziert werden, **dadurch gekennzeichnet, dass** eine Überwachung der elektrischen Leitfähigkeit des lonentauscherablaufs erfolgt und ein erster Teilstrom des aufzubereitenden Rohwassers mittels des Ionenaustauschers behandelt wird, wobei ein zweiter Teilstrom von bis zu 90 % des Rohwassers über einen Bypass geführt und die beiden Teilströme auf der Reinwasserseite vermischt werden, wobei der Anteil des über den Bypass geleiteten Teilstromes in Abhängigkeit der elektrischen Leitfähigkeit des lonentauscherablaufs geregelt wird, wobei mehrere jeweils eine lonenaustauscherschüttung enthaltende lonentauscherfilter parallel geschaltet sind, sodass zumindest ein lonenaustauscherfilter zur Reduktion von Spurenelementen eingesetzt werden kann, während gleichzeitig zumindest ein anderer lonenaustauscherfilter regeneriert und/oder rückgespült wird, wobei ein aus Ionenaustauscherharzen, die mit CO₂ regeneriert werden können, gebildetes Mischbett verwendet wird und eine Regeneration des Ionenaustauschers durch Rückspülung des lonenaustauscherfilters mit CO₂-haltigem Wasser durchgeführt wird, wobei die elektrische Leitfähigkeit auf der Reinwasserseite des austretenden behandelten Wassers überwacht wird, wobei bei Überschreitung eines festlegbaren Grenzwertes bedarfsweise eine Regeneration des Ionenaustauschers ausgelöst wird.

2. Verfahren nach Anspruch 1, **dadurch gekennzeichnet, dass** als Ionenaustauscher ein schwach saurer Kationenaustauscher oder ein stark basischer Anionenaustauscher oder eine Mischung aus einem schwach sauren Kationenaustauscher und einem stark basischen Anionenaustauscher eingesetzt wird.

3. Verfahren nach einem der vorherigen Ansprüche, **dadurch gekennzeichnet, dass** die zu reduzierenden Spurenelemente im Rohwasser im Bereich von unter 1 mg/l vorliegen.

4. Verfahren nach einem der vorherigen Ansprüche, **dadurch gekennzeichnet, dass** es sich bei den zu reduzierenden Spurenelementen um Chromat und/oder Eisen und/oder Mangan und/oder Aluminium und/oder Arsen und/oder Fluorid und/oder Ammonium und/oder Phosphat und/oder Uran handelt.

5. Verfahren nach einem der vorherigen Ansprüche, **dadurch gekennzeichnet, dass** mittels des Ionenaustauschers in dem lonenaustauscherfilter gleichzeitig zur Reduktion der Spurenelemente eine Teilentsalzung des Rohwassers durchgeführt wird.

6. Verfahren nach einem der vorherigen Ansprüche, **dadurch gekennzeichnet, dass** dem Rohwasser vor der Behandlung mittels des Ionenaustauschers Pulveraktivkohle zur Reduzierung organischer Inhaltsstoffe zugesetzt wird.

7. Verfahren nach einem der vorherigen Ansprüche, **dadurch gekennzeichnet, dass** der Ionenaustauscher in Form einer lonenaustauscherschüttung verwendet wird, mittels dessen Feststoffe aus dem Rohwasser gefiltert werden, die bei einer Regeneration und Rückspülung des Ionenaustauschers ausgespült und als Abwasser abgeführt werden.

8. Verfahren nach einem der vorherigen Ansprüche, **dadurch gekennzeichnet, dass** der Ionenaustauscher in Form einer lonenaustauscherschüttung verwendet wird, wobei eine Regeneration und Rückspülung der lonenaustauscherschüttung durch Rückspülung mit CO₂haltigem Wasser und optional Luft und/oder HCl und/oder NaCl und/oder NaOH und/oder einer Mischung aus NaCl und NaOH durchgeführt wird.

9. Verfahren nach einem der vorherigen Ansprüche, **dadurch gekennzeichnet, dass** eine CO₂-Rückgewinnung durch eine Behandlung des CO₂-haltigen Regenerationswassers und/oder des Eluats mittels Kompressoren oder mittels einer Kombination von Vakuumpumpen und Kompressoren nach einer Regeneration des Ionenaustauschers durchgeführt und das entnommene CO₂ in einen CO₂-Speicher zurückgeführt wird.

10. Verfahren nach einem der vorherigen Ansprüche, **dadurch gekennzeichnet, dass** bei einer Regeneration des Ionenaustauschers anfallende Eluat mit einer Umkehrosmose und/oder Nanofiltration und/oder Entkarbonisierungsanlage unter Zugabe von Lauge aufbereitet wird, wobei das dabei anfallende Reinwasser in einen Spülwassertank oder dem Reinwasserstrom zugeführt wird.

11. Verfahren nach einem der vorherigen Ansprüche, **dadurch gekennzeichnet, dass** Eisen, Mangan, Aluminium, Arsen und Fluorid im anaeroben Bereich sowohl bei höheren Konzentrationen als auch im Spurenstoffbereich unterhalb von 1 mg/l Rohwasser als gelöste Stoffe vom lonenaustauscherharz aufgenommen und bei der Regeneration ohne Sauerstoffzugabe als Abwasser feststofffrei bzw. feststoffarm abgeleitet werden.

12. Verfahren nach einem der vorherigen Ansprüche, **dadurch gekennzeichnet, dass** Eisen, Mangan, Aluminium, Arsen und Fluorid im aeroben Bereich sowohl bei höheren Konzentrationen als auch im Spurenstoffbereich unterhalb von 1 mg/l Rohwasser als ungelöste Stoffe vom lonenaustauscherharz gefiltert und bei der Regeneration als Abwasser abgeleitet werden.

## Claims

1. Method for the reduction of trace elements in water, in particular for the preparation of drinking water, wherein raw water flows through at least one ion exchanger filter containing ion exchangers and trace elements in the water are reduced by means of the ion exchanger, **characterised in that** the electrical conductivity of the ion exchanger effluent is monitored and a first partial flow of the raw water to be processed is treated by means of the ion exchanger, wherein a second partial flow of up to 90% of the raw water is conducted via a bypass and the two partial flows are mixed on the treated water side, wherein the proportion of the partial flow conducted via the bypass is regulated depending on the electrical conductivity of the ion exchanger effluent, wherein a plurality of ion exchanger filters each containing an ion exchanger bed are connected in parallel such that at least one ion exchanger filter can be used for the reduction of trace elements while at the same time at least one other ion exchanger filter is regenerated and/or backwashed, wherein a mixed bed formed of ion exchanger resins which can be regenerated with CO₂ is used, and the ion exchanger is regenerated by backwashing the ion exchanger filter with water containing CO₂, wherein the electrical conductivity on the treated water side of the outgoing treated water is monitored, wherein regeneration of the ion exchanger is triggered as required if a definable limit value is exceeded.

2. Method according to claim 1, **characterised in that** a weakly acidic cation exchanger or a strongly basic anion exchanger or a mixture of a weakly acidic cation exchanger and a strongly basic anion exchanger is used as the ion exchanger.

3. Method according to any of the preceding claims, **characterised in that** the trace elements to be reduced are present in the raw water in the range of less than 1 mg/l.

4. Method according to any of the preceding claims, **characterised in that** the trace elements to be reduced are chromate and/or iron and/or manganese and/or aluminium and/or arsenic and/or fluoride and/or ammonium and/or phosphate and/or uranium.

5. Method according to any of the preceding claims, **characterised in that** a partial desalination of the raw water is carried out by means of the ion exchanger in the ion exchanger filter at the same time as the reduction of the trace elements.

6. Method according to any of the preceding claims, **characterised in that** powdered activated carbon is added to the raw water before treatment by means of the ion exchanger in order to reduce organic substances.

7. Method according to any of the preceding claims, **characterised in that** the ion exchanger is used in the form of an ion exchanger bed, by means of which solids are filtered out of the raw water, and are flushed out and discharged as waste water during regeneration and backwashing of the ion exchanger.

8. Method according to any of the preceding claims, **characterised in that** the ion exchanger is used in the form of an ion exchanger bed, wherein regeneration and backwashing of the ion exchanger bed is carried out by backwashing with water containing CO₂ and optionally air and/or HCl and/or NaCl and/or NaOH and/or a mixture of NaCl and NaOH.

9. Method according to any of the preceding claims, **characterised in that** CO₂ recovery is carried out by treating the regeneration water containing CO₂ and/or the eluate by means of compressors or by means of a combination of vacuum pumps and compressors after regeneration of the ion exchanger, and the extracted CO₂ is returned to a CO₂ reservoir.

10. Method according to any of the preceding claims, **characterised in that** eluate obtained during regeneration of the ion exchanger is treated with a reverse osmosis and/or nanofiltration and/or decarbonisation system with the addition of lye, wherein the treated water thereby obtained is fed into a flushing water tank or to the treated water flow.

11. Method according to any of the preceding claims, **characterised in that** iron, manganese, aluminium, arsenic and fluoride, in the anaerobic range, both at higher concentrations and in the trace substance range below 1 mg/l raw water, are absorbed as dissolved substances by the ion exchanger resin and discharged as waste water free of solids or low in solids during regeneration without the addition of oxygen.

12. Method according to any of the preceding claims, **characterised in that** iron, manganese, aluminium, arsenic and fluoride, in the aerobic range, both at higher concentrations and in the trace substance range below 1 mg/l raw water, are filtered as undissolved substances by the ion exchanger resin and discharged as waste water during regeneration.

## Revendications

1. Procédé de réduction d'éléments à l'état de traces dans l'eau, en particulier pour l'approvisionnement en eau potable dans lequel de l'eau non traitée traverse au moins un échangeur d'ions contenant un filtre échangeur d'ions et des éléments à l'état de traces sont réduits dans l'eau au moyen de l'échangeur d'ions, **caractérisé en ce qu'**une surveillance de la conductivité électrique de la sortie de l'échangeur d'ions s'effectue et un premier écoulement partiel de l'eau non traitée à traiter est traitée au moyen de l'échangeur d'ions, dans lequel un second écoulement partiel allant jusqu'à 90 % de l'eau non traitée est acheminé par l'intermédiaire d'une dérivation et les deux écoulements partiels sont mélangés sur le côté eau pure, dans lequel le volume d'écoulement partiel dirigé par l'intermédiaire de la dérivation est réglé en fonction de la conductivité électrique de la sortie de l'échangeur d'ions, dans lequel plusieurs filtres échangeurs d'ions contenant chacun un lit échangeur d'ions sont branchés en parallèle, de sorte qu'au moins un filtre échangeur d'ions peut être utilisé pour la réduction des éléments à l'état de traces, pendant qu'au moins un autre filtre échangeur d'ions est régénéré et/ou lavé à contre-courant simultanément, dans lequel un lit mixte réalisé à partir de résines échangeuses d'ions, qui peuvent être régénérées avec du CO₂ est utilisé et une régénération de l'échangeur d'ions est réalisée par un lavage à contre-courant du filtre échangeur d'ions avec de l'eau contenant du CO₂, dans lequel la conductivité électrique est surveillée sur le côté eau pure de l'eau traitée sortante, dans lequel en cas de dépassement d'une valeur seuil pouvant être fixée, une régénération de l'échangeur d'ions est déclenchée si nécessaire.

2. Procédé selon la revendication 1, **caractérisé en ce qu'**un échangeur de cations faiblement acide ou un échangeur d'anions fortement basique ou un mélange composé d'un échangeur de cations faiblement acide et d'un échangeur d'anions fortement basique est utilisé comme échangeur d'ions.

3. Procédé selon l'une quelconque des revendications précédentes, **caractérisé en ce que** les éléments à l'état de traces à réduire dans l'eau non traitée se situent dans la plage inférieure à 1 mg/l.

4. Procédé selon l'une quelconque des revendications précédentes, **caractérisé en ce que** les éléments à l'état de traces à réduire sont du chromate et/ou du fer et/ou du manganèse et/ou de l'aluminium et/ou de l'arsenic et/ou du fluorure et/ou de l'ammonium et/ou du phosphate et/ou de l'uranium.

5. Procédé selon l'une quelconque des revendications précédentes, **caractérisé en ce qu'**une déminéralisation partielle de l'eau non traitée est réalisée au moyen de l'échangeur d'ions dans le filtre échangeur d'ions simultanément à la réduction des éléments à l'état de traces.

6. Procédé selon l'une quelconque des revendications précédentes, **caractérisé en ce que** du charbon actif en poudre est ajouté à l'eau non traitée avant le traitement au moyen de l'échangeur d'ions pour la réduction des composants organiques.

7. Procédé selon l'une quelconque des revendications précédentes, **caractérisé en ce que** l'échangeur d'ions est utilisé sous la forme d'un lit échangeur d'ions, au moyen duquel des matières solides sont filtrées de l'eau non traitée, qui lors d'une régénération et un lavage à contre-courant de l'échangeur d'ions sont éliminées par rinçage et évacuées dans les eaux usées.

8. Procédé selon l'une quelconque des revendications précédentes, **caractérisé en ce que** l'échangeur d'ions est utilisé sous la forme d'un lit échangeur d'ions, dans lequel une régénération et un lavage à contre-courant du lit échangeur d'ions sont réalisés par lavage à contre-courant avec de l'eau contenant du CO₂ et facultativement de l'air et/ou du HCl et/ou du NaCl et/ou du NaOH et/ou un mélange composé de NaCl et de NaOH.

9. Procédé selon l'une quelconque des revendications précédents, **caractérisé en ce qu'**une récupération du CO₂ par un traitement de l'eau de régénération contenant du CO₂ et/ou de l'éluat au moyen de compresseurs ou au moyen d'une combinaison de pompes à vide et de compresseurs est réalisée après une régénération de l'échangeur d'ions et le CO₂ extrait est renvoyé dans un réservoir de stockage de CO₂.

10. Procédé selon l'une quelconque des revendications précédentes, **caractérisé en ce que** l'éluat produit lors d'une régénération de l'échangeur d'ions est traité par une osmose inverse et/ou une nanofiltration et/ou une installation de décarbonatation en ajoutant une solution aqueuse alcaline, dans lequel l'eau pure produite est introduite dans un réservoir d'eau de rinçage ou dans le courant d'eau pure.

11. Procédé selon l'une quelconque des revendications précédentes, **caractérisé en ce que** du fer, du manganèse, de l'aluminium, de l'arsenic et du fluorure sont absorbés dans une zone anaérobie aussi bien à des concentrations plus élevées que dans une zone de substance à l'état de traces inférieure à 1 mg/l d'eau non traitée en tant que substance dissoute de résine échangeuse d'ions et lors de la régénération sans ajout d'oxygène sont rejetés sous forme d'eaux usées sans matières solides ou à faible teneur en matière solide.

12. Procédé selon l'une quelconque des revendications précédentes, **caractérisé en ce que** du fer, du manganèse, de l'aluminium, de l'arsenic et du fluorure sont filtrés dans une zone aérobie aussi bien à des concentrations plus élevées que dans une zone de substance à l'état de traces inférieure à 1 mg/l d'eau non traitée en tant que substance non dissoute de résine échangeuse d'ions et lors de la régénération sont rejetés sous forme d'eaux usées.
